## Europäisches Patentamt
## European Patent Office
## Office européen des brevets

(19)

(11) Numéro de publication: **0 080 950**

**B2**

(12) **NOUVEAU FASCICULE DE BREVET EUROPÉEN**

(45) Date de publication du nouveau fascicule du brevet: **21.06.89**

(51) Int. Cl.⁴: **F 16 D 55/224**

(21) Numéro de dépôt: **82402169.5**

(22) Date de dépôt: **29.11.82**

(54) Frein à disque à étrier monté coulissant.

(30) Priorité: **30.11.81 FR 8122345**

(43) Date de publication de la demande:
**08.06.83 Bulletin 83/23**

(45) Mention de la délivrance du brevet:
**23.10.85 Bulletin 85/43**

(45) Mention de la decision concernant l'opposition:
**21.06.89 Bulletin 89/25**

(84) Etats contractants désignés:
**DE FR GB IT NL SE**

(56) Documents cité:
**DE-A-2 014 468**
**FR-A-1 145 864**
**FR-A-1 392 267**
**FR-A-1 534 065**
**FR-A-2 176 357**
**FR-A-2 222 571**
**FR-A-2 252 035**
**FR-A-2 272 298**
**FR-A-2 416 394**

(73) Titulaire: **BENDIX France, 126, rue de Stalingrad, F-93700 Drancy (FR)**

(72) Inventeur: **Carré, Jean- Jacques, 59 Blvd de l'Est, F-93340 Le Raincy (FR)**

(74) Mandataire: **Lejet, Christian, Division Technique Service Brevets BENDIX Europe 126, rue de Stalingrad, F-93700 Drancy (FR)**

EP 0 080 950 B2

## Description

La présente invention a pour objet un frein à disque dont l'étrier est monté coulissant sur un support fixe au moyen d'une colonnette axiale unique.

La demande de brevet européen publiée sous le numéro 0 030 502 représente et décrit un frein à disque dont l'étrier est monté coulissant sur un support fixe dans une ouverture duquel sont reçus en ancrage et en coulissement axial les deux éléments de friction susceptibles de venir en engagement de friction avec les faces opposées du disque tournant lors de la mise en oeuvre d'un moteur de frein, l'étrier étant monté coulissant au moven d'une colonnette axiale fixée au support fixe et reçu en coulissement dans un alésage formé en vis-à-vis dans l'étrier. Dans ce frein, le support fixe comprend deux bras s'étendant radialement vers la périphérie du disque dans un plan sensiblement parallèle au plan du disque, les deux bras étant prolongés par deux bras transversaux s'étendant axialement au-delà de la péripherie du disque. Dans ce frein, lorsque l'on désire ralentir la rotation du disque tournant dans le sens de rotation avant correspondant a la marche avant du véhicule, on actionne le moteur de frein pour provoquer l'engagement de friction des deux éléments de friction avec les faces opposées du disqué. Les efforts engendrés par l'engagement de friction de l'élément de friction interne sont transmis au bras avant du support fixe; de la même façon les efforts de friction engendrés par l'engagement de friction de l'élément de friction externe avec la face correspondante du disque tournant sont transmis au même bras avant du support fixe. Seule une faible part, due à la déformation élastique du bras avant de l'élément fixe, des efforts de friction engendrés par l'élément de friction externe est transmise au bras arrière du support fixe par l'intermédiaire de l'étrier coulissant et de la colonnette axiale.

La demande de brevet français publiée sous le numéro 2 422 863 représente et décrit un frein à disque dont l'étrier est monté coulissant sur un support fixe au moyen d'une colonnette axiale unique fixée au support fixe et reçe en coulissement dans un alésage correspondant de l'étrier. Dans ce frein, le support fixe comporte un bras unique s'étendant radialement vers la périphérie du disque dans un plan parallèle à ce dernier. Les deux organes de friction sont reçus en ancrage et en coulissement sur l'étrier coulissant. Lors de l'actionnement du moteur de frein pour provoquer le ralentissement de la rotation du disque tournant, les efforts de friction engendrés tant par l'organe de friction interne que par l'organe de friction externe sont transmis au bras unique du support fixe par l'intermédiaire de l'étrier et de la colonnette axiale unique.

Dans les deux types de frein à disque à colonnette axiale unique qui viennent d'être décrits, on comprend que l'ensemble des efforts de freinage sont transmis à un bras principal ou unique du support fixe qui encaisse la plus grande partie ou la totalité de ces efforts de friction. Dans le premier type de frein à disque mentionné ci-dessus, il est donc nécessaire de prévoir un bras avant du support fixe de forte section pouvant encaisser les efforts de friction et résister à la fatigue, ce bras avant étant par ailleurs encombrant et lourd de par sa structure s'étendant au-delà de la périphérie du disque. Dans le deuxième type de frein à disque mentionné ci-dessus, la transmission de la totalité des efforts de friction au bras unique du support fixe nécessite également un bras de forte section mais aussi une colonnette axiale de fort diamètre pour permettre la transmission des efforts de friction.

Le document FR-A-2 272 298 propose un frein à disque comprenant un étrier coulissant sur une seule colonette et dont l'organe de friction interne transmet l'effort de freinage sur un support fixe alors que l'organe de friction externe transmet l'effort de freinage à l'étrier coulissant. Dans ce type de frein, bien que les efforts de freinage des deux organes de freinage soient répartis entre le support fixe et la colonnette, cette dernière supportant la trainée engendrée par l'organe de friction externe qui, du fait du décalage axial entre la force de trainée et la réaction de l'étrier sur la colonnette engendre la rotation de l'étrier favorisant une usure diagonale ou différentielle de l'élément de friction externe.

Le document DE-A-2 014 468 qui a été utilisé pour la délimitation des revendications indépendantes, propose un frein à disque destiné à résoudre des problèmes d'usure différentielle des patins, mais dans lequel les patins sont disposés l'un en face de l'autre.

On comprend, que grâce à une telle structure, les efforts de friction engendrés par l'élément de friction interne sont transmis en totalité audit bras avant du support fixe, les efforts de friction engendrés par le patin externe étant transmis au bras arrière du support fixe au travers de l'étrier coulissant et de la colonnette axiale.

Il a été proposé dans le document FR-A-2 176 357 de limiter l'usure différentielle sur chaque élément de friction en décalant le centre de gravité de la surface de contact et le centre de gravité de la surface de friction, ce qui introduit une répartition des pressions sur l'élément de friction différente, augmentant la pression là où l'usure était la plus faible. Cette structure permettant à chacun des éléments de friction de mieux répartir les pressions impose d'avoir une grande longueur de l'élément de friction non supporté par le frein, ce qui provoque le fléchissement de la plaque support lors des freinages intensifs qui se traduit par un frottement intempestif des éléments de friction sur le disque lorsque le fléchissement cesse au relâchement de la pression de freinage.

L'invention est basée sur un frein à disque à colonnette axiale unique présentant tous les avantages de ce type de frein, c'est-à-dire notamment l'élimination du problème de l'alignement des deux colonnettes dans les freins à disque de ce type et dans lequel les efforts de friction engendrés par les éléments de friction interne et externe sont répartis de manière égale sur deux bras du support fixe.

L'invention a pour but de corriger l'usure différentielle de chacun des éléments de friction en évitant qu'une extrémité de cet élément de friction soit usée davantage que l'autre extrémité ce type d'usure est particulièrement critique sur des freins coulissants et plus particulièrement sur les freins ne comportant qu'une seule colonnette axiale.

Dans ce but, selon un premier mode de réalisation, l'invention propose un frein à disque du type comprenant un étrier monté coulissant sur un support fixe au moyen d'une colonnette s'étendant parallèlement à l'axe du disque, ledit support fixe comportant deux bras s'étendant radialement vers la périphérie du disque, ce dernier définissant, lorsqu'il tourne dans le sens de rotation avant, un bras avant et un bras arrière du support fixe, un moteur de frein agissant directement sur un élément de friction interne et, par réaction au travers de l'étrier sur un élément de friction externe, ledit élément de friction interne prenant appui sur une surface d'appui formée sur ledit bras avant du support fixe lorsque le moteur de frein est actionné pour ralentir la rotation dans le sens de rotation avant du disque, ledit élément de friction externe étant fixé audit étrier coulissant auquel il transmet des efforts de friction engendrés lorsqu'il est sollicité en engagement de friction avec ledit disque tournant, ladite colonnette étant associée audit bras arrière du support fixe, ledit moteur de frein comprenant un piston monté coulissant dans un alésage de l'étrier, lesdits éléments de friction interne et externe comprenant chacun une plaque support sur laquelle est fixée une garniture de friction, caractérisé en ce que le centre de la garniture de friction de l'élément de friction interne est décalé tangentiellement en direction dudit bras arrière du support fixe par rapport à un plan radial passant par l'axe dudit piston et en ce que le centre de la garniture de friction de l'élément de friction externe est décalé tangentiellement et en direction dudit bras avant par rapport audit plan radial formant ainsi des moyens de correction d'usure différentielle.

Selon un deuxième mode de réalisation, l'invention propose un frein à disque du type comprenant un étrier monté coulissant sur un support fixe au moyen d'une colonnette s'étendant parallèlement à l'axe du disque, ledit support fixe comportant deux bras s'étendant radialement vers la périphérie du disque, ce dernier définissant, lorsqu'il tourne dans le sens de rotation avant, un bras avant et un bras arrière du support fixe, un moteur de frein agissant directement sur un élément de friction interne et par réaction au travers de l'étrier sur un élément de friction externe, ledit élément de friction interne prenant appui sur une surface d'appui formée sur ledit bras avant du support fixe lorsque le moteur de frein est actionné pour ralentir la rotation dans le sens de rotation avant du disque, ledit élément de friction externe étant fixe audit étrier coulissant auquel il transmet des efforts de friction engendrés lorsqu'il est sollicité en engagement de friction avec ledit disque tournant, ladite colonnette étant associée audit bras arrière du support fixe, caractérisé en ce que des moyens de correction d'usure sont formés par ladite colonnette dont le diamètre et le point médian du coulissement sont déterminés pour provoquer la flexion de ladite colonnette lorsque les éléments de friction sont sollicités en engagement de friction avec le disque tournant, ladite flexion compensant sensiblement la rotation de l'étrier dans le plan tangeant lorsque ledit étrier est sollicité par les efforts de friction.

Ces caractéristiques permettent de créer lors du freinage un couple antagoniste au couple introduit par la distance entre la coulissement constitué par la colonnette axiale unique et l'effort de traînée des garnitures de friction évitant ainsi une usure différentielle de chacun de éléments de friction.

D'autres caractéristiques et avantages du frein à disque, objet de la présente invention, apparaîtront à la lecture de la description détaillée du frein se référant aux dessins annexés dans lesquels:

la figure 1 est une vue de face d'un frein à disque réalisé conformément aux enseignements de la présente invention;
la figure 2 est une vue en coupe selon la ligne 2 - 2 de la figure 1;
la figure 3 est une vue arrière du frein à disque selon la flèche 3 de la figure 2; et
la figure 4 est une vue de dessus du frein à disque représenté à la figure 3.

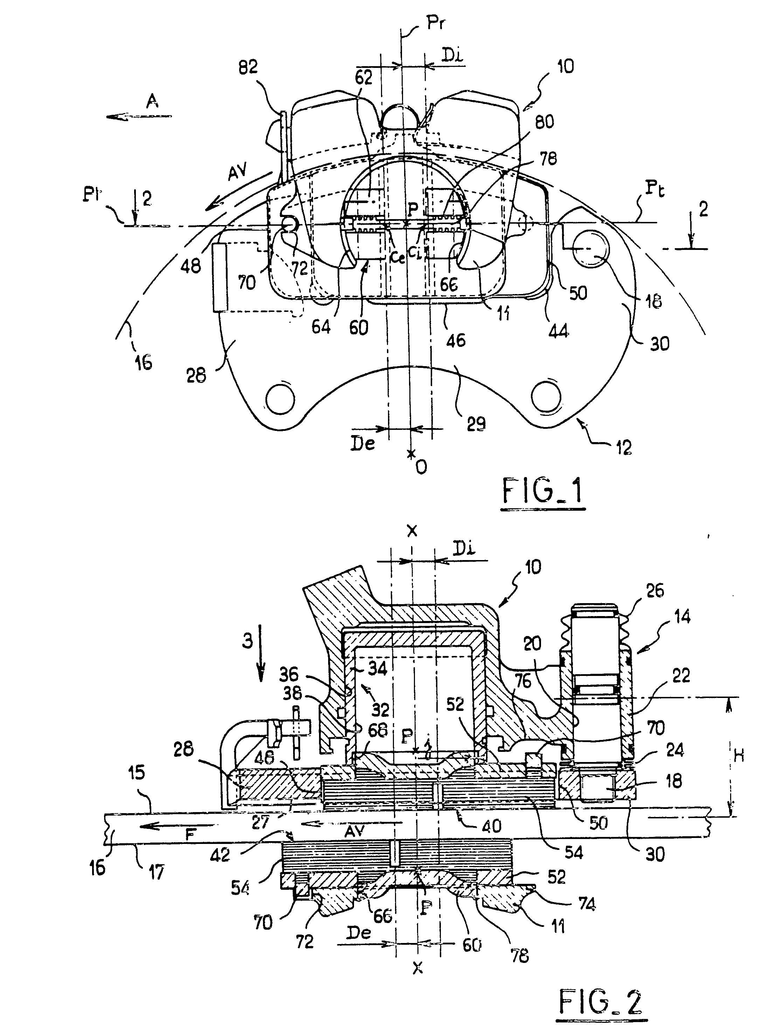

Le frein à disque représenté aux figures 1 à 4 comprend un étrier mobile 10 monté coulissant sur un organe ou support fixe 12. L'étrier 10 est monté coulissant sur le support fixe 12 au moyen d'une colonnette 14 s'étendant parallèlement à l'axe de rotation du disque tournant 16. Dans le mode de réalisation représenté et comme le montre plus particulièrement la figure 2, la colonnette axiale 14 est fixée au support fixe 12 par une liaison filetée 18. La colonnette axiale 14 est reçue en coulissement dans un alésage cylindrique 20 formé dans un bras 22 de l'étrier 10. Des soufflets de protection en caoutchouc 24 et 26 sont prévus de part et d'autre du bras 22 pour protéger la surface de coulissement constituée par la surface externe de la colonnette axiale 14. Le support fixe 12 comprend deux bras 28 et 30 qui s'étendent radialement vers la périphérie du disque dans un plan parallèle aux faces du disque tournant 16. Lorsque le disque tournant 16 tourne dans la direction indiquée sur les figures 1 à 4 par les flèches AV, sens de rotation avant du disque, correspondant à la marche avant du véhicule (non représenté) sur lequel le frein est monté, il définit les deux bras du support fixe 12 comme étant un bras avant 28 et un bras arrière 30. Le frein à disque comprend également un moteur de frein. Dans le mode de réalisation représenté, le moteur de frein 32 est un moteur de frein hydraulique comprenant un piston cylindrique 34 monté coulissant dans un alésage cylindrique 36 usiné dans l'étrier coulissant 10. L'axe XX commun au piston 34 et à l'alésage cylindrique 36 est parallèle à l'axe de rotation O du disque. Un évidement 38 est formé dans le piston 34 du moteur de frein hydraulique 32. Dans le mode de réalisation représenté, l'évidement 38 formé dans le piston est constitué par un alésage coaxial à l'axe XX du piston 34.

Le frein à disque représenté sur les figures comprend un élément de friction interne 40 susceptible d'être sollicité directement en engagement de friction avec la face interne 15 du disque tournant 16 lors de l'actionnement du moteur de frein hydraulique 32, et un élément de friction externe 42 fixé à la partie extrême 11 de l'étrier, communément appelé nez de l'étrier. Lors de l'actionnement du moteur de frein hydraulique 32, l'élément de friction externe 42 est sollicité par réaction au travers de l'étrier coulissant 10, en engagement de friction avec la face externe 17 du disque tournant 16. L'élément de friction interne 40 est reçu en ancrage et en coulissement dans une ouverture 44 du support fixe 12. L'ouverture 44 es définie entre les bras avant et arrière 28 et 30 du support fixe et le bord supérieur 46 de la partie médiane 29 du support fixe 12 reliant les bras 28 et 30. Selon l'invention, l'extrémité filetée 18 de la colonnette axiale 14 est fixée à l'extrémité périphérique du bras arrière 30 du support fixe 12. Lorsque l'opérateur actionne le moteur de frein hydraulique 32 pour ralentir le disque tournant 16, lorsque ce dernier tourne dans le sens de rotation avant défini plus haut, l'élément de friction interne 40 entre en engagement de friction avec la face interne 15 du disque 16. Cet engagement de friction engendre des efforts de traînée dont la résultante appliquée à l'élément de friction 40 sollicite ce dernier dans la direction indiquée par la flèche A de la figure 1, c'est-à-dire dans une direction parallèle au plan tangeant Pt et en direction du bras avant 28 du support fixe 12. L'élément de friction interne 40 prend alors appui sur une surface d'appui 48 formée sur le bras avant 28 du support fixe 12. Dans le mode de réalisation représenté, la surface d'appui 48 est une surface plane s'étendant parallèlement au plan radial Pr passant par l'axe O du disque 16 et par l'axe XX de l'alésage 36 formé dans l'étrier 10. On comprend qu'ainsi, tous les efforts de friction engendrés par l'engagement de friction de l'élément de friction interne 40 avec la face interne 15 du disque ayant pour effet de ralentir la rotation dans le sens de rotation avant du disque, sont transmis au bras avant 28 du support fixe 12.

L'élément de friction externe 42 est fixe au nez 11 de l'étrier 10 par des moyens de fixation et de positionnement qui seront décrits en détail plus loin. Lors du même actionnement du moteur de frein hydraulique 32, l'élément de friction 42 est sollicité en engagement de friction avec la face externe 17 du disque tournant 16; les efforts de friction engendrés lors de cet engagement de friction étant transmis dans un premier temps au nez 11 de l'étrier puis par l'intermédiaire de la voûte 9 de l'étrier 10 s'étendant au-delà de la périphérie du disque 16 au bras 22 de l'étrier 10. On comprend qu'ainsi les efforts de friction engendrés par l'engagement de friction de l'élément 42 avec le disque 16 sont transmis à la colonnette axiale 14 et donc au bras arrière 30 du support fixe 12.

En conséquence, les efforts de friction engendrés par l'engagement de friction des éléments de friction interne et externe lors du ralentissement du disque tournant dans le sens de rotation avant sont répartis de manière égale sur les bras avant et arrière 28 et 30 du support fixe. Une telle répartition des efforts perment de dimensionner raisonnablement les bras 28 et 30 et de réaliser ainsi des économies de matière et donc de poids sur l'ensemble du frein.

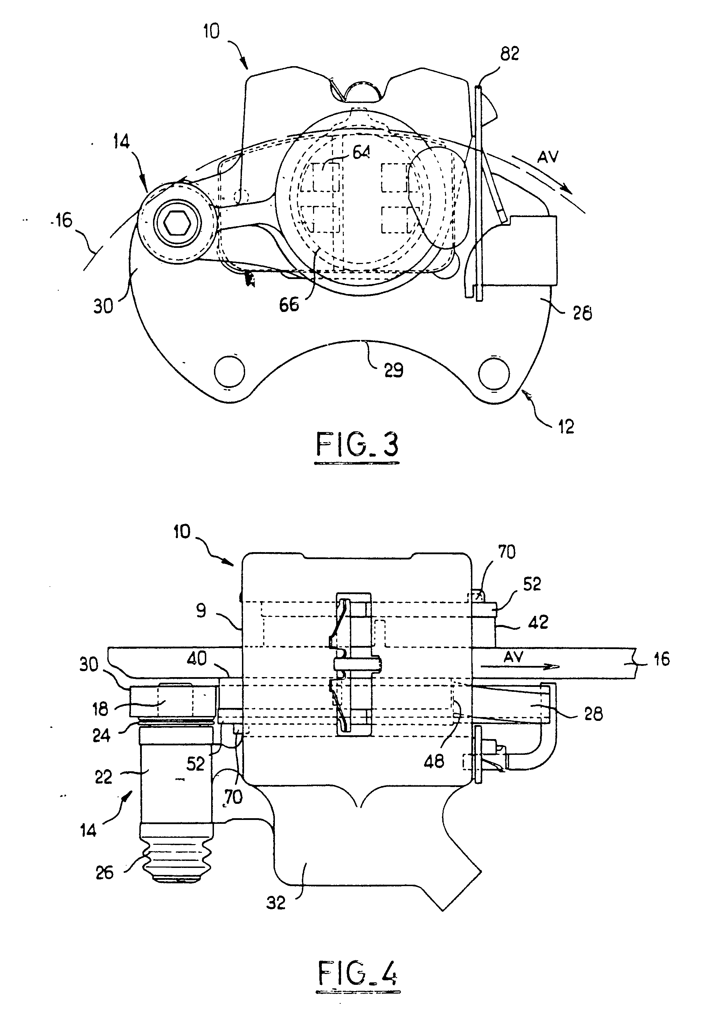

Selon une autre caractéristique de l'invention, la surface d'appui 48 de l'élément de friction interne 40 est, comme on peut le constater notamment à la figure 4, décalée axialement en direction du disque par rapport au plan parallèle aux faces du disque dans lequel s'étendent les bras avant et arrière du support fixe. Ce décalage axial permet d'assurer un appui correct de l'élément de friction interne 40 sur la surface d'appui 48 au fur et à mesure de l'usure des garnitures de friction. Lorsque l'on actionne le moteur de frein hydraulique 32 pour réaliser le ralentissement de la rotation du disque 16 lorsque ce dernier tourne dans le sens de rotation arrière, c'est-à-dire dans le sens opposé de rotation avant, les efforts de friction engendrés par l'engagement de l'élément interne 40 avec le disque 16 sont transmis au bras arrière 30 du support fixe 12; l'élément interne 40 prenant alors appui sur une surface d'appui 50 formée sur le bras arrière 30. Dans ce cas, on comprend que l'ensemble des efforts de friction est transmis au bras arrière 30, directement par l'élément de friction interne 40 et au travers de l'étrier 10 et de la colonnette 14 par l'élément de friction externe 42. Néanmoins, ce regroupement des efforts au niveau du bras arrière 30 ne nécessite pas un dimensionnement important de ce dernier bras, le freinage en marche arrière n'intervenant que rarement, pour des couples de freinage souvent plus faibles qu'en marche avant et pour des périodes de temps très courtes, le bras arrière 30 ne travaillant donc pas à la fatigue sous cette charge maximum.

Dans le mode de réalisation représenté, les éléments de friction interne et externe 40 et 42 sont identiques. Chacun des éléments de friction comprend une plaque support de garnitures 52 sur laquelle est fixée une garniture de friction 54. Dans un frein à étrier coulissant du type objet de la présente invention, l'effort de traînée T appliqué au disque lors de l'actionnement du frein est transmis au bras arrière 30 du support fixe 12 au travers du coulissement constitué par la coopération entre la colonnette axiale 14 et l'alésage cylindrique 20 formé dans le bras 22 de l'étrier 10. La distance H séparant le plan du disque 16 auquel s'applique l'effort de traînée du point médian du coulissement de la colonnette axiale 14 dans l'alésage 20 provoque un couple tendant à faire tourner l'étrier 10 dans le plan tangeant Pt dans le sens des aiguilles d'une montre lorsque l'on regarde la figure 2. Ce couple parasite a généralement pour conséquence de provoquer une usure irrégulière des garnitures de friction communément appelée usure en biais. Afin de remédier à cet inconvénient et selon une caractéristique de la présente invention, le centre ci de la garniture de friction 54 de l'élément de friction interne 40 est décalé tangentiellement en direction du bras arrière 30 du support fixe 12 par rapport au plan radial Pr défini plus haut. De la même façon, l'organe de friction externe 42 est fixé au nez 11 de l'étrier de façon que le centre Ce de la garniture de friction 54 de l'élément de friction externe 42 soit décalé tangentiellement et en direction du bras avant 28 du support fixe 12 par rapport au plan radial Pr. Le décalage Di du centre Ci de la garniture de friction de l'élément de friction interne 40 et le décalage De du centre Ce de la garniture de friction de l'élément externe 42 sont de valeurs égales de part et d'autre du plan radial Pr, c'est-à-dire de part et d'autre de l'axe XX commun au piston 34 et à l'alésage 36 du moteur de frein hydraulique 32. De cette façon, on comprend que l'engagement de friction des deux éléments de friction avec le disque tournant crée un couple antagoniste au couple mentionné plus haut et tend à équilibrer ce dernier pour s'opposer à l'usure en bas de patins des garnitures de friction formant ainsi les moyens de correction d'usure différentielle pour chacun des éléments de friction.

Comme on l'a mentionné plus haut et pour des raisons évidentes de facilité de fabrication et d'interchangeabilité des pièces, les deux éléments de friction interne et externe 40 et 42 sont identiques. Il est donc nécessaire de prévoir des moyens de positionnement des éléments de friction tant dans le support fixe que dans le nez 11 de l'étrier permettant d'éviter toute erreur de montage des éléments de friction afin d'assurer le décalage souhaité des garnitures de friction. Selon l'invention, ces moyens de positionnement sont constitués tout d'abord par une portion centrale 60 formée dans la plaque support 52 de chacun des éléments de friction. Dans le mode de réalisation représenté, la portion centrale 60 est obtenue et constituée par quatre découpes formées dans la plaque support de garnitures qui se projettent depuis le plan de cette dernière dans la direction opposée à la face munie de la garniture de friction 54. Les quatre découpes 62 constituant la portion centrale 60 présentent une surface périphérique externe 64 de forme cylindrique. Ces découpes peuvent être réalisées dans la plaque support 52 par emboutissage de cette dernière au moyen d'un outil de forme correspondante. La portion centrale 60 formée dans la plaque support 52 de l'élément de friction externe 42 est reçue dans un alésage de diamètre correspondant 66 formé dans le nez 11 de l'étrier. L'alésage 66 formé dans le nez 11 de l'étrier est coaxial à l'axe XX de l'alésage 36 dans lequel est monté le piston 34 du moteur de frein hydraulique 32. On comprend que les deux alésages 66 et 36 peuvent être réalisés aisément lors d'une opération commune d'usinage de l'étrier 10. D'une manière symétrique, la portion centrale 60 de la plaque support 52 de l'élément de friction interne 40 est reçue dans un évidement 68 formé dans le piston 34 du moteur de frein hydraulique 32. L'évidement 68 formé dans le piston 34 est constitué par une portion de diamètre supérieur de l'alésage interne 38 du piston 34. Afin de s'assurer qu'aucun des efforts de friction engendrés lors de l'engagement de friction de l'élément de friction interne avec la face interne 15 du disque 16 n'est transmis au piston 34 du moteur de frein et par là même à l'étrier 10, la portion centrale 60 est reçue avec un jeu radial j dans l'évidement 68.

Afin de s'assurer du décalage Di de l'élément de friction interne et du décalage De de l'élément de friction externe, le centre géométrique CeCi des éléments de friction externe et interne identiques 42 et 40 est décalé tangentiellement par rapport au centre géométrique P de la portion centrale 60 de la support 52. Les centres géométriques P des deux portions centrales étant bien entendu situés sur l'axe XX lorsque les éléments de friction 40 et 42 occupent leur position normale de fonctionnement.

On comprend qu'il est de plus nécessaire de prévoir des moyens de détrompage permettant d'assurer un positionnement correct des éléments de friction dans le frein. En effet, en cas de montage incorrect notamment de l'élément de friction externe 42, en faisant pivoter celui-ci de 180 autour de l'axe XX par rapport à la position qu'il occupe à la figure 1, ou le montage d'un des patins prévu pour le frein symétrique, on constate que le décalage de la garniture de friction de l'élément de friction externe serait situé en direction du bras arrière 30 du support fixe 12, les deux centres des garnitures de friction étant alors confondus et l'effet de couple antagoniste recherché étant par là même annihilé. Dans le mode de réalisation représenté et selon une autre caractéristique de l'invention, les moyens de détrompage sont constitués par un pion cylindrique 70 vissé sur la plaque support de garnitures 52, ou obtenu par semi-découpe de la plaque support 52, et s'étendant perpendiculairement à cette dernière dans la direction opposée à la face munie de la garniture de friction 54. Les moyens de détrompage comportent également un trou 72 formé dans le nez 11 de l'étrier dans lequel le pion de détrompage 70 de l'élément de friction externe 42 est susceptible d'être reçu lorsque l'élément de friction externe occupe sa position correcte de montage. A l'opposé du trou 72 par rapport au plan radial Pr, se trouve un bossage 74 du nez 11 de l'étrier 10 dans lequel n est pas formé du trou 72; on comprend ainsi qu'il est impossible de réaliser un montage incorrect de l'organe de friction, le pion 70 venant alors buter contre le bossage 74 et la portion centrale 60 ne pouvant ainsi pénétrer dans l'alésage 66 formé dans le nez 11 de l'étrier. De la même façon, le pion de détrompage 70 fixé à la plaque support de garniture 52 de l'élément de friction interne 40 est reçu dans un dégagement 76 formé dans le bras 22 de l'étrier 10. Un mauvais montage de l'élément de friction interne 40 est par ailleurs impossible car la portion centrale de la plaque support 52 de l'élément de friction interne ne pourrait pas pénétrer dans l'évidement 68 formé dans le piston 34. De plus le pion 70 viendrait en butée sur la face latérale 27 du bras 28 du support fixe 12.

La fixation de la portion centrale 60 de l'élément de friction externe 42 dans l'alésage 66 formé dans le nez de l'étrier 11 et le maintien du contact entre la face externe de la plaque support de garniture et la surface correspondante du nez de l'étrier est assurée par une lame ressort 78 accrochée sur les quatre découpes semi-circulaires 62 constituant la portion centrale 60 par des petites languettes 80 travaillant en arc-boutement sur les surfaces correspondantes des quatre découpes 62.

Selon un autre mode de réalisation de l'invention, les éléments de friction 40 et 42 sont indentiques et ne présentent pas de décalage tangentiel par rapport au plan radial $P_r$, passant par l'axe XX du piston 34. Comme indiqué précédemment, la distance H séparant le plan du disque 16 auquel s'applique l'effort de traînée du point médian du coulissement de la colonnette axiale 14 dans l'alésage 20 provoque un couple tendant à faire tourner l'étrier 10 dans le plan tangent $P_t$ dans le sens des aiguilles d'une montre lorsque l'on regarde la figure 2. Le point médian du coulissement supporte par ailleurs l'effort tangentiel engendré par la friction de l'élément de friction 42. Cet effort appliqué à la colonnette 14 provoque sa flexion par rapport au bras arrière 30 auquel elle est associée par la liaison filetée 18. L'extrémité libre de la colonnette 14 tend donc à fléchir dans le sens contraire des aiguilles d'une montre toujours en se référant à la figure 2 sous l'action de cet effort tangentiel. Cette flexion engendre sur l'étrier 10 un couple de même sens, à savoir dans le sens contraire des aiguilles d'une montre. On comprend que l'étrier étant soumis à deux couples antagonistes, il suffit que ceux-ci soient sensiblement identiques pour que les éléments de friction ne présentent pas d'usure différentielle, c'est-à-dire que la garniture de friction 54 soit régulièrement usée parallèlement par la plaque support 52. Pour que les couples antagonistes soient sensiblement indentiques et en particulier lorsque les garnitures de friction sont presque complètement usées, la flexion de la colonnette 14 est contrôlée par un choix judicieux de son diamétre et des distances du point médian de coulissement d'une part au plan du disque et d'autre part à la fixation de la colonnette 14 sur le bras arrière 30. Il est remarquable que dans ce mode de réalisation, la correction d'usure différentielle se produit aussi bien lors de la marche avant du véhicule, conformément à la description qui précède, que lors de la marche arrière où les couples sont inversés mais restent toujours antagonistes. Il apparaît clairement que dans cette configuration le éléments de friction sont identiques et interchangeables sans necessité de système de détrompage.

Le frein à disque représenté aux Figures 1 à 4 comprend en outre un ressort d'élément de friction du type de celui décrit dans la demande de brevet français FR-A-2 500 096 (publiée 10. 8. 82) ou tout autre type et qui ne sera pas ici décrit plus en détail. Le frein à disque comporte également des moyens de verrouillage en position de l'étrier par rapport au support fixe 12 constitué par une biellette 82.

**Revendications**

1. Frein à disque du type comprenant un étrier (10) monté coulissant sur un support fixe (12) au moyen d'une colonnette (14) s'étendant parallèlement à l'axe (O) du disque (16), ledit support fixe (12) comportant deux bras (28, 30) s'étendant radialement vers la périphérie du disque (16), ce dernier définissant, lorsqu'il tourne dans le sens de rotation avant (AV), un bras avant (28) et un bras arrière (30) du support fixe (12), un moteur de frein (32) agissant directement sur un élément de friction interne (40) et par réaction au travers de l'étrier (10) sur un élément de friction externe (42), ledit élément de friction interne (40) prenant appui sur une surface d'appui (48) formée sur ledit bras avant (28) du support fixe (12) lorsque le moteur de frein (32) est actionné pour ralentir la rotation dans le sens de rotation avant du disque, ledit élément de friction externe (42) étant fixé audit étrier coulissant (10) auquel il transmet des efforts de friction engendrés lorsqu'il est sollicité en engagement de friction avec ledit disque tournant (16), ladite colonnette (14) étant associée audit bras arrière (30) du support fixe, ledit moteur de frein (32) comprenant un piston (34) monté coulissant dans un alésage (36) de l'étrier (10), lesdits éléments de friction interne (40) et externe (42) comprenant chacun une plaque support (52) sur laquelle est fixée une garniture de friction (54), caractérisé en ce que le centre $(C_i)$ de la garniture de friction (54) de l'élément de friction interne (40) est décalé tangentiellement $(D_i)$ en direction dudit bras arrière (30) du support fixe (12) par rapport à un plan radial $(P_r)$ passant par l'axe (XX) dudit piston et en ce que le centre ($C_e$) de la garniture de friction (54) de l'élément de friction externe (42) est décalé tangentiellement ($D_e$) et en direction dudit bras avant (28) par rapport audit plan radial ($P_r$) formant ainsi des moyens de correction d'usure différentielle.

2. Frein à disque selon la revendication 1, dans lequel lesdits éléments de friction interne (40) et externe (42) sont identiques, caractérisé en ce que la plaque support de garniture de friction (52) est munie de moyens de positionnement (60, 70) coopérant avec des moyens correspondants (66, 78) formés sur le frein pour assurer un positionnement correct desdits éléments de friction.

3. Frein à disque selon la revendication 2, caractérisé en ce que lesdits moyens de positionnement une portion centrale (60) de la plaque support de garniture (52) se projetant depiuis le plan de cette dernière, la portion centrale (60) dudit élément de friction externe (42) étant reçue dans une ouverture (66) de forme correspondante formée dans l'étrier (10), la portion centrale (60) dudit élément de friction interne (40) étant reçue dans un évidement (68) formé dans le piston (34) du moteur de frein.

4. Frein à disque selon la revendication 3, caractérisé en ce que ladite portion centrale (60) présente une surface périphérique externe (64) de forme cylindrique, ladite ouverture (66) formée dans l'étrier étant constituée par un alésage (66), de diamètre correspondant à celui de ladite forme cylindrique (64), et coaxial à l'alésage (36) de l'étrier recevant le piston (34) du moteur de frein (32).

5. Frein à disque selon la revendication 4, caractérisé en ce que ledit évidement (68) formé dans le piston (34) du moteur de frein est constitué par un alésage (68) coaxial à l'axe (XX) dudit piston (34), ladite portion centrale (60) de la plaque support (52) de l'élément de friction interne (40) étant reçue avec un jeu (j) dans l'alésage (68) formé dans le piston de façon à ce qu'aucun des efforts de friction engendrés lorsque ledit élément de friction interne est sollicité en engagement de friction avec le disque ne soit tansmis audit piston du moteur de frein.

6. Frein à disque selon l'une quelconque des revendications 3 à 5 caractérisé en ce que ledit centre ($C_i$, $C_e$) de la garniture de friction est décalé tangentiellement ($D_i$, $D_e$) par rapport au centre géométrique P de ladite portion centrale (60) de la plaque support de garniture de fiction (52).

7. Frein à disque selon l'une des revendications 2 à 6 caractérisé en ce que lesdits moyens de positionnement comportent des moyens de détrompage (70, 72, 74, 76).

8. Frein à disque selon la revendication 7, caractérisé en ce que lesdits moyens de détrompage sont constitués par un pion cylindrique (70) fixé à la plaque support de garniture (52) et s'étendant perpendiculairement à cette dernière, le pion de détrompage (70) dudit élément de friction externe étant reçu dans un trou correspondant (72) formé dans l'étrier, le pion de détrompage (70) dudit élément de fiction interne étant reçu dans un dégagement formé en vis-a-vis dans l'étrier.

9. Frein à disque du type comprenant un étrier (10) monté coulissant sur un support fixe (12) au moyen d'une colonnette (14) s'étendant parallèlement à l'axe (O) du disque (16), ledit support fixe (12) comportant deux bras (28, 30) s'étendant radialement vers la périphérie du disque (16), ce dernier définissant, lorsqu'il tourne dans le sens de rotation avant (AV), un bras avant (28) et un bras arrière (30) du support fixe (12), un moteur de frein (32) agissant directement sur un élément de friction interne (40) et par réaction au travers de l'étrier (10) sur un élément de friction externe (42), ledit élément de friction interne (40) prenant appui sur une surface d'appui (48) formée sur ledit bras avant (28) du support fixe (12) lorsque le moteur de frein (32) est actionné pour ralentir la rotation dans le sens de rotation avant du disque, ledit élément de friction externe (42) étant fixe audit étrier coulissant (10) auquel il transmet des efforts de friction engendrés lorsqu'il est sollicité en engagement de friction avec ledit disque tournant (16), ladite colonnette (14) étant associée audit bras arrière (30) du support fixe, caractérisé en ce que des moyens de correction d'usure sont formés par ladite colonnette (14) dont le diamètre et le point médian du coulissement sont déterminés pour provoquer la flexion de ladite colonnette (14) lorsque les éléments de friction (40 et 42) sont sollicités en engagement de friction avec le disque tournant (16), ladite flexion compensant sensiblement la rotation de l'étrier (10) dans le plan tangeant ($P_t$) lorsque ledit étrier est sollicité par les efforts de friction.

10. Frein à disque selon l'une quelconque des revndications 1 à 9 caractérisé en ce que lesdits bras avant (28) et arrière (30) du support fixe s'étendent dans un plan parallèle à la face (15) du disque (16), ladite surface d'appui (48) formée sur le bras avant (28) étant décalée axialement en direction du disque par rapport audit plan parallèle.

**Patentansprüche**

1. Scheibenbremse mit einem Sattel (10), der auf einem Bremsträger (12) mittels eines Bolzens (14) schwimmend gelagert ist, welcher sich parallel zur Achse (O) der Bremsscheibe (16) erstreckt, wobei der Bremsträger (12) zwei Arme (28, 30) aufweist, die sich radial in Richtung auf den Umfang der Bremsscheibe (16) erstrecken, wobei der letztere bei Drehung in Vorwärtsrichtung (AV) einen vorderen Arm (28) und einen hinteren Arm (30) des Bremsträgers (12) definiert, ein Bremsmotor (32) unmittelbar auf einen inneren Backen (40) und indirekt über den Sattel (10) auf einen äußeren Bremsdbacken (42) einwirkt, der innere Reibbacken (40) an einer am vorderen Arm (28) des Bremsträgers (12) gebildeten Anlagefläche (48) abgestützt ist, wenn der Bremsmotor (32) betätigt wird, um die Drehung in Vorwärtsrichtung der Bremsscheibe zu verzögern, der äußere Bremsbacken (42) am Schwimmsattel (10) festgelegt ist, auf den er Reibkräfte überträgt, die entstehen, wenn er in Reibanlage mit der umlaufenden Bremsscheibe (16) gedrückt wird, der Bolzen (14) dem hinteren Arm (30) des Bremsträgers zugeordnet ist, der Bremsmotor (32) einen Kolben (34) aufweist, der in einer Bohrung (36) des Sattels (10) gleitend gelagert ist, der innere Reibbacken (40) und der äußere Reibbacken (42) jeweils eine Belagträgerplatte (52) aufweisen, an der ein Reibbelag (54) befestigt ist, dadurch gekennzeichnet, daß der Mittelpunkt ($C_i$) des Reibbelages (54) des inneren Bremsbackens (40) tangential ($D_i$) in Richtung des hinteren Arms (30) des Bremsträgers (12) bezüglich einer radialen Ebene ($P_r$) versetzt ist, die durch die Achse (XX) des Kolbens verläuft, und daß der Mittelpunkt ($C_i$) des Reibbelages (54) des äußeren Bremsbackens (42) tangential ($D_e$) und in Richtung des vorderen Arms (28) bezüglich der besagten radialen Ebene ($P_r$) versetzt ist, wodurch Mittel zur Korrektur einer unterschiedlichen Abnutzung gebildet werden.

2. Scheibenbremse nach Anspruch 1, bei der der innere Bremsbacken (40) und der äußere Bremsbacken (42) identisch sind, dadurch gekennzeichnet, daß die Belagträgerplatte (52) mit Positionierungsmitteln (60, 70) versehen ist, die mit an der Bromse gebildeten entsprechenden Mitteln (66, 78) zusammenwirken, um eine korrekte Positionierung der Bremsbacken sicherzustellen.

3. Scheibenbremse nach Anspruch 2, dadurch gekennzeichnet, daß die Positionierungsmittel einen zentralen Abschnitt (60) der Belagträgerplatte (52) aufweisen, welcher von der Ebene des letzteren nach außen vorsteht, wobei der zentrale Abschnitt (60) des äußeren Bremsbackens (42) von einer im Sattel (10) gebildeten Öffnung (66) entsprechender Form aufgenommen wird, während der zentrale Abschnitt (60) des inneren Bremsbackens (40) von einer Ausnehmung (68) aufgenommen wird, die im Kolben (34) des Bremsmotors gebildet ist.

4. Scheibenbremse nach Anspruch 3, dadurch gekennzeichnet, daß der zentrale Abschnitt (60) eine äußere Umfangsfläche (64) von zylindrischer Form aufweist, wobei die im Sattel gebildete Öffnung (66) aus einer Bohrung (66) besteht, deren Durchmesser demjenigen der zylindrischen Form (64) entspricht und die koaxial zu der den Kolben (34) des Bremsmotors (32) aufnehmenden Bohrung (36) des Sattels verläuft.

5. Scheibenbremse nach Anspruch 4, dadurch gekennzeichnet, daß die im Kolben (34) des Bremsmotors gebildete Ausnehmung (68) aus einer Bohrung (68) besteht, die koaxial zur Achse (XX) des Kolbens (34) verläuft, wobei der zentrale Abschnitt (60) der Belagträgerplatte (52) des inneren Bremsbackens (40) mit einem Spiel (j) von der im Kolben gebildeten Bohrung (68) so aufgenommen wird, daß keine Reibkräfte, die bei Reibanlage des inneren Bremsbackens an der Bremsscheibe entstehen, auf den Kolben des Bremsmotors übertragen werden.

6. Scheibenbremse nach einem der Ansprüche 3 - 5, dadurch gekennzeichnet, daß der besagte Mittelpunkt ($C_i$, $C_e$) des Reibbelages tangential ($D_i$, $D_e$) bezüglich des geometrischen Mittelpunkte (P) des zentralen Abschnitts (60) der Belagträgerplatte (52) versetzt ist.

7. Scheibenbremse nach einem der Ansprüche 2 - 6, dadurch gekennzeichnet, daß die Positionierungsmittel Unverwechselbarkeitsmittel (70, 72, 74, 76) aufweisen.

8. Scheibenbremse nach Anspruch 7, dadurch gekennzeichnet, daß die Unverwechselbarkeitsmittel von einem zylindrischen Stift (70) gebildet werden, der an der Belagträgerplatte (52) befestigt ist und sich senkrecht zu dieser erstreckt, wobei der Unverwechselbarkeitsstift (70) des äußeren Bremsbackens von einem im Sattel gebildeten entsprechenden Loch (72) aufgenommen wird, während der Unverwechselbarkeitsstift (70) des inneren Bremsbackens von einer Ausnehmung aufgenommen wird, die gegenüberliegend im Sattel gebildet ist.

9. Scheibenbremse mit einem Sattel (10), der auf einem Bremsträger (12) mittels eines Bolzens (14) schwimmend gelagert ist, weicher sich paralle zur Achse (O) der Bremsscheibe (16) erstreckt, wobei der Bremsträger (12) zwei Arme (28, 30) aufweist, die sich radial in Richtung auf den Umfang der Bremsscheibe (16) erstrecken, wobei der letztere bei Drehung in Vorwärtsrichtung (AV) einer) vorderen Arm (28) und einen hinteren Arm (30) des Bremsträgers (12) definiert, ein Bremsmotor (32) unmittelbar auf einen inneren Backen (40) und indirekt über den Sattel (10) auf einen äußeren Bremsbacken (42) einwirkt, der innere Reibbacken (40) an einer am vorderen Arm (28) des Bremsträgers (12) gebildeten Anlagefläche (48) abgestützt ist, wenn der Bremsmotor (32) betätigt wird, um die Drehung in Vorwärtsrichtung der Bremsscheibe zu verzögern, der äußere Bremsbacken (42) am Schwimmsattel (10) festgelegt ist, auf den er Reibkräfte überträgt, die entstehen, wenn er in Reibanlage mit der umlaufenden Bremsscheibe (16) gedrückt wird, der Bolzen (14) dem hinteren Arm (30) des Bremsträgers zugeordnet ist, dadurch gekennzeichnet, daß Mittel zur Korrektur der Abnutzung von dem Bolzen (14) gebildet werden, dessen Durchmesser und mittlerer Gleitpunkt so bestimmt sind, daß eine Durchbiegung des Bolzens (14) hervorgerufen wird, wenn die Bremsbacken (40 und 42) in Reibanlage mit der umlaufenden Bremsscheibe (16) gedrückt werden, wobei diese Durchbiegung die Drehung des Sattels (10) in der Berührungsebene ($P_t$) im wesentlichen kompensiert, wenn die Reibkräfte auf den Sattel einwirken.

10. Scheibenbremse nach einem der Ansprüche 1 - 9, dadurch gekennzeichnet, daß der vordere Arm (28) und der hintere Arm (30) des Bremsträgers in einer Ebene verlaufen, die parallel zur Seitenfläche (15) der Bremsscheibe (16) ist, wobei die vom vorderen Arm (28) gebildete Anlagefläche (48) axial in Richtung der Bremsscheibe bezüglich der besagten parallelen Ebene versetzt ist.

**Claims**

1. Disk brake of the type comprising a caliper (10) mounted slidably on a fixed support (12) by means of a pillar (14) extending parallel to the axis (O) of the disc (16), said fixed support (12) comprising two arms (28, 30) extending radially towards the periphery of the disc (16), the latter, when it turns in the forward direction of rotation (AV), defining a front arm (28) and a rear arm (30) of the fixed support (12), a brake motor (32) acting directly on an inner friction member (40) and, by reaction through the caliper (10), on an outer friction member (42), said inner friction member (40) bearing against a support surface (48) formed on said front arm (28) of the fixed support (12) when the brake motor (32) is operated to slow down the rotation of the disc in the forward direction of rotation, said outer friction member (42) being fixed to said sliding caliper (10), to which it transmits frictional forces generated when it is brought into frictional engagement with said rotating disc (16), said pillar (14) being associated with said rear arm (30) of the fixed support, said brake motor (32) having a piston (34) mounted slidably in a bore (36) in the caliper (10), said inner and outer friction members (40 and 42 respectively) each comprising a support plate (52) on which a friction lining (54) is fixed, characterized in that the centre ($C_i$) of the friction lining (54) of the inner friction member (40) is offset tangentially ($D_i$) in the direction of said rear arm (30) of the fixed support (12) in relation to a radial plane ($P_r$) passing through the axis (XX) of said piston, and in that the centre ($C_e$) of the friction lining (54) of the outer friction member (42) is offset tangentially ($D_e$) and in the direction of said front arm (28) in relation to said radial plane ($P_r$) thus forming means for the correction of differential wear.

2. Disc brake according to Claim 1, in which said inner and outer friction members (40 and 42 respectively) are identical, characterized in that the friction lining support plate (52) is provided with positioning means (60, 70) cooperating with corresponding means (66, 78) formed the brake to ensure correct positioning of said friction members.

3. Disc brake according to Claim 2, characterized in that said positioning means comprise a central portion (60) of the lining support plate (52) projecting from the plane of the latter, the central portion (60) of said outer friction member (42) being received in an opening (66) of corresponding shape formed in the caliper (10), and the central portion (60) of said inner friction member (40) being received in a cavity (68) formed in the piston (34) of the brake motor.

4. Disc brake according to Claim 3, characterized in that said central portion (60) has an outer peripheral surface (64) of cylindrical shape, said opening (66) formed in the caliper consisting of a bore (66) whose diameter corresponds to that of said cylindrical shape (64) and which is coaxial to the bore (36) in the caliper which receives the piston (34) of the brake motor (32).

5. Disc brake according to Claim 4, characterized in that said cavity (68) formed in the brake motor piston (34) consists of a bore (68) coaxial to the axis (XX) of said piston (34), said central portion (60) of the support plate (52) of the inner friction member (40) being received with clearance (j) in the bore (68) formed in the piston in such a manner that none of the frictional forces generated when said inner friction member is brought into frictional engagement with the disc is transmitted to said brake motor piston.

6. Disc brake according to any one of Claims 3 to 5, characterized in that said centre ($C_i$, $C_e$) of the friction lining is offset tangentially ($D_i$, $D_e$) in relation to the geometrical centre P of said central portion (60) of the friction lining support plate (52).

7. Disc brake according to any one of Claims 2 to 6, characterized in that said positioning means comprise foolproof locating means (70, 72, 74, 76).

8. Disc brake according to Claim 7, characterized in that said foolproof locating means consist of a cylindrical pin (70) fixed to the lining support plate (52) and extending at right angles to the latter, the foolproof locating pin (70) of said outer friction member being received in a corresponding hole (72) formed in the caliper, and the foolproof locating pin (70) of said inner friction member being received in a cutout formed facing it in the caliper.

9. Disc brake of the kind comprising a caliper (10) mounted slidably on a fixed support (12) by means of a pillar (14) extending parallel to the axis (O) of the disc (16), said fixed support (12) comprising two arms (28, 30) extending radially towards the periphery of the disc (16), the latter, when it turns in the forward direction of rotation (AV), defining a front arm (28) and a rear arm (30) of the fixed support (12), a brake motor (32) acting directly on an inner friction member (40) and, by reaction through the caliper (10), on an outer friction member (42), said inner friction member (40) bearing against a support surface (48) formed on said front arm (28) of the fixed support (12) when the brake motor (32) is operated to slow down the rotation of the disc in the forward direction of rotation, said outer friction member (42) being fixed to said sliding caliper (10), to which it transmits frictional forces generated when it is brought into frictional engagement with said rotating disc (16), said pillar (14) being associated with said rear arm (30) of the fixed support, characterized in that wear correction means are formed by said pillar (14), the diameter and midpoint of the sliding of which are so determined as to effect the bending of said pillar (14) when the friction members (40 and 42) are brought into frictional engagement with the rotating disc (16), said bending substantially compensating for the rotation of the caliper (10) in the tangent plane ($P_t$) when said caliper is stressed by the frictional forces.

10. Disc brake according to any one of Claims 1 to 9, characterized in that said front and rear arms (28 and 30 respectively) of the fixed support extend in a plane parallel to the face (15) of the disc (16), said support surface (48) formed on the front arm (28) being axially offset in the direction of the disc in relation to said parallel plane.

FIG_1

FIG_2

FIG. 3

FIG. 4

3